(19)

**Europäisches Patentamt**
**European Patent Office**
**Office européen des brevets**

(11)  **EP 4 485 733 A1**

(12)  **EUROPEAN PATENT APPLICATION**

(43) Date of publication:
  **01.01.2025  Bulletin 2025/01**

(21) Application number: **23182751.0**

(22) Date of filing: **30.06.2023**

(51) International Patent Classification (IPC):
  **H02J 3/00** *(2006.01)*    **H02H 7/10** *(2006.01)*
  **H02H 9/02** *(2006.01)*    **H02M 1/32** *(2007.01)*

(52) Cooperative Patent Classification (CPC):
  **H02J 3/001; H02H 7/10; H02H 9/02; H02M 1/32;**
  **H02M 7/4835**

(84) Designated Contracting States:
  **AL AT BE BG CH CY CZ DE DK EE ES FI FR GB**
  **GR HR HU IE IS IT LI LT LU LV MC ME MK MT NL**
  **NO PL PT RO RS SE SI SK SM TR**
  Designated Extension States:
  **BA**
  Designated Validation States:
  **KH MA MD TN**

(71) Applicant: **Hitachi Energy Ltd**
  **8050 Zürich (CH)**

(72) Inventors:
  • **DANIELSSON, Christer**
    **725 91 Västerås (SE)**
  • **HASLER, Jean-Philippe**
    **722 44 Västerås (SE)**
  • **ZHANG, Hongyang**
    **115 24 Stockholm (SE)**
  • **HEYDARI, Rasool**
    **722 12 Västerås (SE)**

(74) Representative: **Epping - Hermann - Fischer**
  **Patentanwaltsgesellschaft mbH**
  **Schloßschmidstraße 5**
  **80639 München (DE)**

(54)  **METHOD FOR OPERATING A POWER ELECTRONIC CONVERTER DEVICE, A CONTROL DEVICE FOR OPERATING A POWER ELECTRONIC CONVERTER DEVICE AND A GRID CONTROL SYSTEM**

(57)    According to an embodiment, the method for operating a power electronic converter device (1) comprises the steps of providing fault information (I) which is representative of whether a fault appears in a grid connected with the power electronic converter device. If this is the case, a first measure (M1) is executed over a first time interval (T1), wherein the first measure is configured to reduce the current (iValve) through the power electronic converter device. Furthermore, also a second measure (M2) is executed over a second time interval (T2), wherein the second measure is also configured to reduce the current through the power electronic converter device. The first measure is faster in reducing the current through the power electronic converter device than the second measure. The second time interval is longer than the first time interval.

Fig. 3

EP 4 485 733 A1

**Description**

The present disclosure relates to a method for operating a power electronic converter device, to a control device for operating a power electronic converter device and a grid control system. Furthermore, the present disclosure relates to a computer program and a computer-readable data carrier.

Power electronics is the application of solid-state electronics to control and convert one form of electrical power to another form such as converting between AC and DC or changing the magnitude and phase of voltage and current or frequency or combination of these. Power electronic devices are used to couple sources of electrical power generation to electrical transmission and/or distribution networks, also referred to herein as simply 'electrical grids' or 'grids', thus supplying the electrical grid with electrical power.

In order for a source (e.g. wind turbines, solar panels, HVDC systems and links, and the like) to provide electrical power to the grid, the generated power needs to be converted to an appropriate form (e.g., in continental Europe, the electrical grid is alternating current (AC) at a frequency of 50 Hz). Moreover, the generated power and the grid need to be aligned (i.e. phase of the AC signal, voltage, etc.).

Power electronic converter devices, herein also called PECDs, are used to provide power to the electrical grid in such an aligned or synchronous manner. PECDs can comprise a number of valves (also called "legs"), wherein each vale comprise one or more serial connected converter cells. Each converter cell has a number of transistor switches. A transistor switch may be an insulated gate bipolar transistor (IGBT), a gate turn-off transistor (GTO), an integrated gate-commutated thyristor (IGCT), or the like. The transistor switches are arranged and fired in a particular way to generate an AC signal that is suitably aligned to the electrical grid to which it is supplying power.

In order to co-ordinate the firing of these switches, control signals are provided thereto. A proper generation of these control signals is important for ensuring an output from the PECD that is aligned to the grid. There exist various methods for controlling PECDs. Many PECDs connected to the grid today are operated using grid following control (GFL). They require a firm available grid voltage, for example to accurately establish the phase of the voltage signal, and basically act as current sources. An alternative way of operating a power electronic converter is grid forming control (GFM), also known as 'grid-leading'.

GFM is characterized as a voltage source behind an impedance, such that it can create and maintain voltage. GFM is intended to mimic the beneficial behavior of a synchronous generator, but PECDs can have superior performance to synchronous generators because the GFM can overcome some shortcomings of the synchronous generators, for example their tendency for low-frequency oscillation. At the same time, a PECD may have different limitations compared to a synchronous machine, and the GFM control structure is incomplete without addressing these limitations.

One object to be achieved is to provide a method for operating a power electronic converter device (PECD) which can contribute to safe operation of the PECD, particularly an avoidance of damage in the PECD, particular in its valves. Especially, an object is to provide a control strategy which can guarantee limitation of the maximum valve current in order to avoid damage of the PECD components. Further objects to be achieved are to provide a control device for operating a PECD and a grid control system with which the method can be executed. Additional objects to be achieved are to provide a computer program and a computer-readable data carrier for executing the method.

First, the method for operating a PECD is specified. The method may be used for operating the PECD in the grid forming mode or in the grid following mode.

According to an embodiment, the method comprises the steps of providing fault information which is representative of whether a fault appears in a grid connected with the PECD. If this is the case, i.e. if the fault information is representative of that a fault has appeared, a first measure is executed over a first time interval, wherein the first measure is configured to reduce the current through the PECD. Furthermore, also a second measure is executed over a second time interval, wherein the second measure is also configured to reduce the current through the PECD. The first measure is faster in reducing the current through the PECD than the second measure. The second time interval is longer than the first time interval.

The present invention is, inter alia, based on the recognition that there is a crucial distinction between a PECD and a conventional synchronous machine (SM) when considering the over-circuit capability during fault conditions or contingencies. In the conventional SM-dominant grid, during a faulty condition, the SMs are able to inject large, short-circuit current up to 6-8 p.u. of the nominal current. However, such an overload behavior is not feasible with the current-sensitive semiconductor devices used in PECDs.

Many current limitation strategies are mostly based on the switching to grid following mode during a fault and limiting the current through PECD. However, the GFM-PECDs should be able to maintain their voltage source-mode characteristics, while limiting the converter currents and avoid wind-up in the outer loops simultaneously and be robust to weak-grid situations.

This invention proposes a coordinated current limiter function limiting the current through the PECD in a smooth way, as well as adjusting the outer loops accordingly during a fault condition while keeping the leg dc voltages balanced and under control. The method described herein allows to limit the current through the PECD and stabilize it close to the PECD current capability without producing distortions. Thus, PECD does not enter the temporary-block mode. Instead, when the valve current is too high, the valve current is smoothly limited without applying an emergency block of the valves. This is achieved, in particular, by performing different measures which are performed over different time intervals and which are differently aggressive/efficient.

The describe method is, in particular, a computer implemented method.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data or electronic signals.

The fault extractable from the fault information may be an overcurrent or a short circuit in the grid. The fault may be on the grid side or the converter side, i.e. on both sides of a transformer connected to the PECD. The fault can be an impedance fault or short-circuit between the power line phases or a short circuit to ground on either side of the transformer.

Both the first and the second measure are configured to reduce a current through the PECD. The current through the PECD is, particularly, a current through a valve of the PECD, i.e. a valve current. For example, the current which is reduced is the highest current running through a valve of the PECD.

The first measure is faster or more aggressive, respectively, in reducing the current trough the PECD than the second measure. That is, when the first and the second measure are started at the same moment in time, the first measure causes the maximum of the current through the PECD to fall below a defined threshold earlier than the second measure would cause this. The defined threshold is, for example, a rated current of the PECD. By way of example, with the second measure, the time for the maximum of the currents through the PECD to fall below the defined threshold takes at least 2 times or at least 5 times as long as with the first measure.

The second time interval is longer than the first time interval, e.g. at least 2 times or at least 5 times or at least 10 times as long as the first time interval. The first and the second measure may be started at the same moment in time. Alternatively, the second measure may be started after the first measure. Preferably, the first and the second time interval overlap with each other, e.g. the second measure starts before the first measure ends.

According to a further embodiment, the method comprises a step of executing a third measure over a third time interval. The third measure is executed if the fault information is representative of that a fault appears in the grid. Also the third measure is configured to reduce the current through the PECD.

According to a further embodiment, the second measure is faster in reducing the current through the PECD than the third measure. For example, the second measure is at least 2 times or at least 5 times faster, wherein the comparison may again refer to the maximum of the current falling below the defined threshold.

According to a further embodiment, the third time interval is longer than the second time interval, e.g. at least 2 times or at least 5 times or at least 10 times as long as the second time interval. The third measure may be started at the same moment in time as the first and/or the second measure. Alternatively, the third measure may be started after the first and/or the second measure. Preferably, the third time interval overlaps with the first and/or the second time interval, e.g. the third measure starts before the first and/or the second measure ends.

According to a further embodiment, the method comprises a step of determining a current reference information. The current reference information is representative of a reference current. The reference current is for controlling the current through the PECD. Particularly, when the PECD is controlled according to the reference current, the current through the PECD follows the reference current.

According to a further embodiment, the first measure is clipping or cutting-off the reference current. The result is a clipped or cut-off reference current, which does not exceed the threshold. The PECD may then be operated with this cut-off reference current.

The threshold may be the above defined threshold, e.g. the rated current. For example, the threshold is below the current withstand capability of the valves. This clipping is a so-called hard limit on the reference current. It forces the reference current to stay below the threshold. The clipping is an emergency limit on the reference current with the purpose to avoid temporary block of the PECD. However, this measure can create considerable harmonics and power unbalance, which is why it is executed only shortly, namely over the first time interval.

The method is, in particular, executed by a control device, also called "controller", like a computer. When executed, the control device may establish different modules. The modules may be software-implemented or may be hardware components. Also a mixture is possible. For example, the control system comprises an inner voltage source module and an inner admittance controller module. The control system may further comprise a limiter function module and/or an instantaneous current limiter module and/or an alternating voltage controller module and/or a direct voltage controller module and/or a power balancing control module and/or a reference summation module.

The inner voltage source module may be configured to determine inner voltage information which is representative of an inner voltage. The virtual admittance control module may be configured to determine information which is representative of a (preliminary) reference current depending on the inner voltage information.

The first measure is, in particular, executed by or with the help of an instantaneous current limiter module.

According to a further embodiment, the second measure comprises a continuous reduction of the reference current. For example, this continuous reduction preserve the sinusoidal wave-shape of the reference current. Particularly, this continuous reduction of the reference current is coordinated with the DC voltage control of the PECD. By way of example, the continuous reduction is done such that the active power exchanged with the different valves/legs of the PECD are equalized. In this way, the above-mentioned DC voltage unbalance can be counteracted.

The continuous reduction of the reference current may be done with help of the inner voltage source module and/or the virtual admittance controller module and/or the reference summation module.

According to a further embodiment, the method comprises a step of providing virtual admittance information which is representative of a virtual admittance. The reference current information is determined depending on the virtual admittance information. Particularly, the reference current is determined form the virtual admittance and the inner voltage.

According to a further embodiment, the continuous reduction of the reference current comprises an adjustment of the virtual admittance. The adjustment is, in particular, a reduction. Alternatively, a virtual impedance may be adjusted.

Adjusting the virtual admittance is, in particular, done with the help of the reference summation module. For example, the adaption of the virtual admittance is done depending on the phase-phase voltage, also called grid voltage, measured at the PECD side of the transformer and/or depending on the measured current across a leg of the PECD. It may further be done depending on a comparison between the voltage drop in a valve, particularly over a capacitor of the valve, and a reference for this voltage drop.

The adjustment of the virtual admittance can also be called a soft limit applied to the reference current in order to preserve the sinusoidal wave-shape of the reference current.

According to a further information, the method comprises a step of providing inner voltage information which is representative of an inner voltage. The reference current information is determined depending on the inner voltage information. Particularly, the reference current is determined form the virtual admittance and the inner voltage. The inner voltage corresponds to back-EMF of a synchronous machine, i.e., the no load output voltage.

According to a further embodiment, the continuous reduction of the reference current comprises a modification of the inner voltage. For the second measure, the inner voltage may be modified depending on a comparison between the voltage drop in a valve, particularly over the capacitor of the valve, and the reference for this voltage drop. Furthermore, for the second measure, the inner voltage may be modified depending on the phase-phase voltage measured at the PECD side of the transformer and/or depending on the measured current across a leg of the PECD.

Modification of the inner voltage for the second measure may be done with help of the alternating voltage controller module and/or the current limiter module.

According to a further embodiment, the third measure comprises a continuous adjustment of the inner voltage. For the third measure, the inner voltage may be adjusted according to a comparison between the line current on the primary side of the transformer and the rated current and/or depending on the phase-phase voltage on the primary side of the transformer. Adjustment of the inner voltage for the third measure may be done with the help of the inner voltage source module and/or the alternating voltage control module and/or the limiter function module. The adjustment of the inner voltage according to the third measure is also called the primary current limiting which is a slow limiter limiting the transformer primary current or voltage.

According to a further embodiment, the first time interval is at most 10 ms or at most 1 ms. Particularly, the first time interval is at most one cycle or at most half a cycle of the sinusoidal wave of the current through the PECD.

According to a further embodiment, the second time interval is at most 500 ms or at most 140 ms.

Next, the computer program and the computer-readable data carrier are specified. The computer program comprises instructions, which, when the program is executed by a control device, cause the control device to carry out the method described herein. The computer-readable data carrier has the computer program stored thereon.

Next, the control device is specified. The control device comprises means for executing the method described herein. The control device may be a computer and/or may comprise one or more processors. Particularly, the control device may comprise a programmable logic controller, PLC. The control device is, in particular, the control device described above. Therefore, all features described in connection with the method are also described for the control device and vice versa. Particularly, in operation, the control device establishes the above-mentioned modules.

Next, the grid control system is specified.

According to an embodiment, the grid control system comprises a PECD and the control device as specified herein. The control device is signally connected to the PECD in order to operate the PECD depending signals of the control device. Particularly, the grid control system is configured to execute the method described herein. Therefore, all features described connection with the method are also disclosed for the grid control system and vice versa.

According to a further embodiment, the PECD is a STATCOM or an Enhanced STATCOM.

Hereinafter, the method for operating a PECD, the control device, and the grid control system will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.

Figure 1 shows a flow chart of an exemplary embodiment of the method,

Figure 2 shows an exemplary embodiment of the grid control system,

Figure 3 shows an exemplary embodiment of the control device,

Figures 4 and 5 show different diagrams illustrating exemplary embodiments of the different measures.

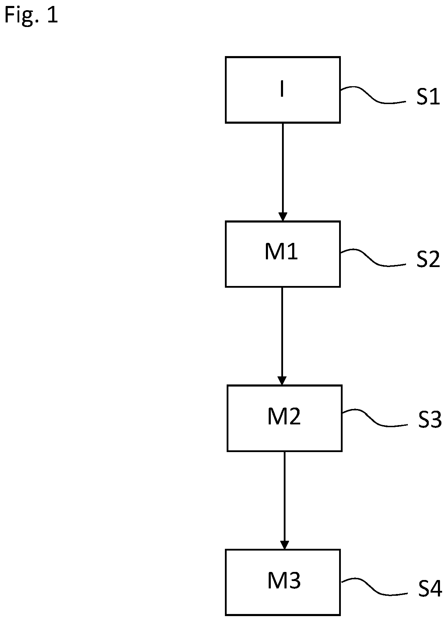

In figure 1, showing an exemplary embodiment of a method for operating a PECD, a step S1 is executed in which fault information I is provided. The fault information I is representative of whether a fault appears in a grid connected with the PECD. If this is the case, steps S1, S2 and S3 are executed, in which a first M1, a second M2 and a third M3 measure are executed. The first measure M1 is executed over a first time interval T1 and is configured to reduce a current iValve through the PECD 1. The second measure M2 is executed over a second time interval T2 and is also configured to reduce the current iValve through the PECD 1. The third measure M3 is executed over a third time interval T3 and is also configured to reduce the current iValve through the PECD 1. The first measure M1 is faster in reducing the current iValve through the PECD 1 than the second measure M2 and the second measure M2 is faster in reducing the current iValve through the PECD 1 than the third measure M3. On the other hand, the second time interval T2 is longer than the first time interval T1 and the third time interval T3 is longer than the second time interval T2.

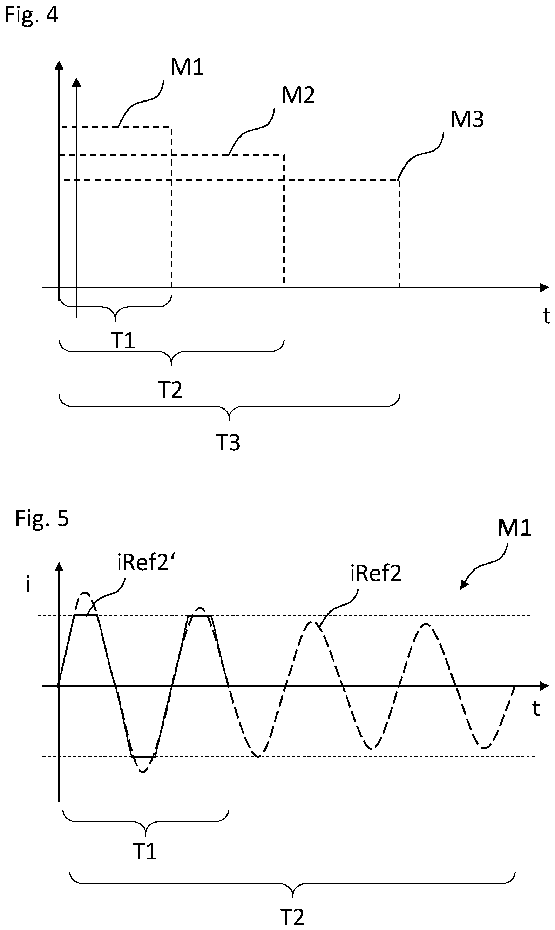

It is illustrated in figure 1 that the different measures M1 to M3 are executed one after the other. However, the measures M1 to M3 may overlap in time and, in particular, may be started at the same time. This case is, for example, shown in figure 4.

Figure 5 shows a diagram illustrating the effect of the first M1 and the second M2 measure. The y-axis is the current and the x-axis the time. The dashed line indicates a reference current iRef2 used for controlling the current iValve through the PECD1 such that the current through the PECD 1 follow the reference current iRef2. As can be seen here, a fault has appeared in the grid and the reference current iRef2 is too high, namely above a threshold indicated by the horizontal dashed lines. Accordingly, the first M1 and the second M2 measures are simultaneously started.

The second measure M2 executed over the time interval T2 applies a soft-limit to the reference current iRef2 so that the reference current iRef2 is continuously reduced. The sinusoidal form of the wave is substantially maintained by this second measure M2. However, as can be seen in figure 5, this soft-limit does not reduce the reference current iRef2 very quickly so that a maximum of the reference current iRef2 stays above a threshold which may be the rated current of the PECD 1. The solid curve illustrates the cut-off or clipped reference current iRef2' resulting from cutting-off the reference current iRef2 when it reaches the threshold (i.e. a hard cut on the reference current iRef2). This is the first measure M1 used during the time interval T1. During this time interval, the cut-off reference current iRef2 is used for controlling the PECD 1 instead of the reference current iRef2. This hard limit first measure M1 is effective in avoiding overcurrent and possible failure of the PECD 1, however, it may induce harmonics and power unbalance in the PECD 1 which is why it is only applied shortly until the measure M2 can overtake.

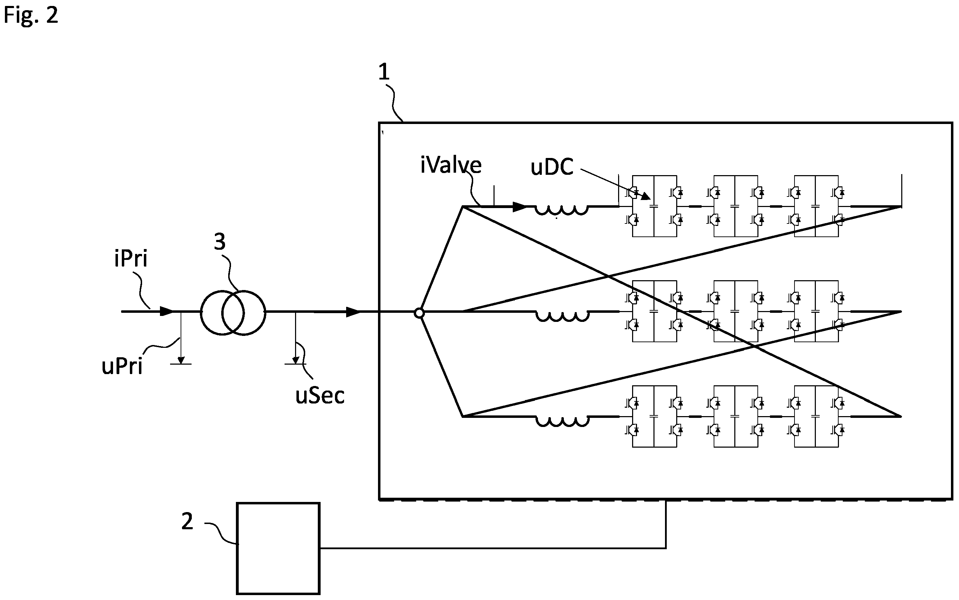

Figure 2 shows an exemplary embodiment of a grid control system comprising a PECD 1 and a control device 2 which is signally connected to the PECD 1 and configured to operate the PECD 1 according to the operation method described herein.

The PECD 1 is connected to a grid which comprises a transformer 3. The PECD 1 may also be realized in a different valve topology than shown in Figure 2, e.g. in a Y-connection topology or W-connection topology or 2-Level topology or 3-Level topology.

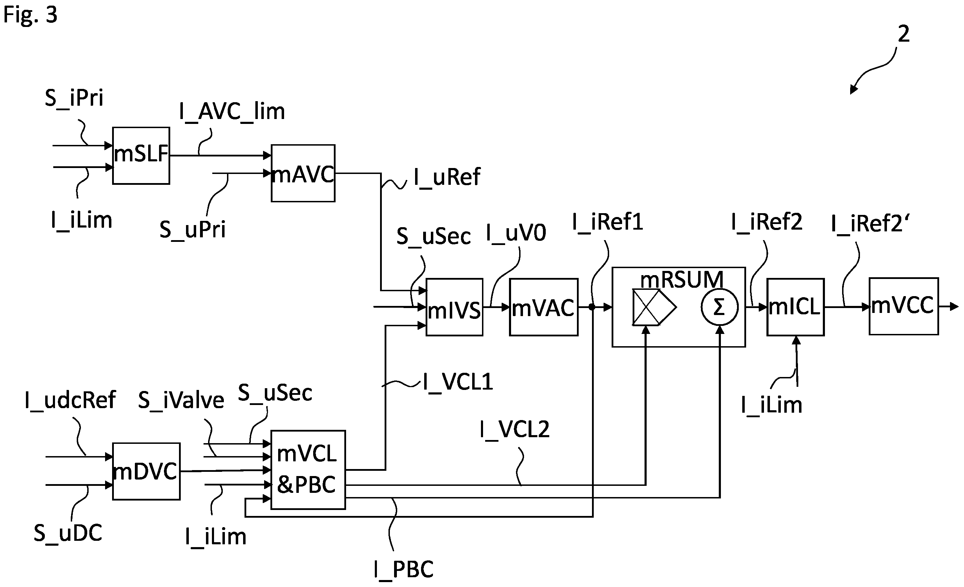

Figure 3 illustrates an exemplary embodiment of the control device 2 with which the above described operation method can be executed. The control device 2 is, for example, the one of figure 2. The control device 2 comprises or establishes a limiter function- (SLF-) module mSLF, an alternating voltage controller- (AVC-) module mAVC, a direct voltage controller-(DVC-) module mDVC, a current limiter and power balancing control- (VCL&PBC-) module mVCL&PBC, an inner voltage source-(IVS-) module mIVS, a virtual admittance controller- (VAC-) module mVAC, a reference summation- (RSUM-) module mRSUM, an instantaneous current limiter- (ICL-) module mICL and a vector current controller- (VCC-) module mVCC.

The SLF-module mSLF receives a signal S_iPri which is representative of the line current iPri on the primary side of the transformer 3 (see also figure 2) and information I_iLim which is representative of the rated current iLim defined by the design of the respective PECD. The SLF-module mSLF determines, form the signal S_iPri and the information I_iLim, information I_AVC_lim which is representative of a limiting factor AVC_lim. For example, AVC_lim is equal to 1 in the case the line current iPri does not exceed the rated current iLim and is decreased in the case the line current iPri exceeds the rated current iLim.

The AVC-module mAVC receives as an input the information I_AVC_lim and a signal S_uPri which is representative of the phase-phase voltage uPri on the primary side of the transformer 3 (see figure 2). Depending on these inputs, the AVC-module mAVC determines information I_uRef which is representative of a reference voltage uRef. uRef changes with changing AVC_lim. The inner voltage uV0 is determined depending on the reference voltage uRef. The adjustment of the inner voltage uV0 depending on the reference voltage uRef is the above-mentioned third measure M3 or at least part thereof.

The SFL-module mSFL module and the AVC-module mAVC are part of the so-called slow control of the control device 2. This slow control device sets the operating point of the PECD.

The DVC-module mDVC receives a signal S_uDC which is representative of the valve cell capacitor voltage uDC, i.e. the voltage drop over the capacitor of the valve (see also figure 2). Furthermore, the DVC-module mDVC receives information I_udcRef which is representative of a control reference for uDC, i.e. the setpoint of uDC.

Depending on the signal S_uDC and on the information I_udcRef, the DVC-module mDVC determines an output signal which is transmitted to the VCL&PBC-module mVCL&PBC. The output signal will basically modify the phase angle of the current reference which influences the active power exchange with the grid.

Besides this, the VCL&PBC-module mVCL&PBC further receives the above-described information I_iLim, information I_iRef1 as well as signals S_uSec and S_iVsc.

The information I_iRef1 is representative of a preliminary reference current iRef1 determined with the help of the VAC module (see explanation further below). The signal S_uSec is representative of the phase-phase voltage uSec, also called grid voltage or medium voltage or bus voltage uSec, on the valve side of the transformer 3 (see figure 2). The signal S_iValve is representative of the current iValve across the respective PECD valve/leg, i.e. the string of the valves (see also figure 2).

From all the information and signals, the VCL&PBC-module mVCL&PBC determines, inter alia, information I_VCL1 which is representative of a first current limit parameter VCL1. The IVS-module mIVS receives the information I_VCL1 and adjusts or modifies the inner voltage uV0 depending on this first current limit parameter VCL1. This corresponds to the above-mentioned second measure M2 for reducing the current iValve.

The IVS-module mIVS also receives the signal S_uSec and uses it for determining the inner voltage uV0.

The IVS-module mIVS generates and outputs information I_uV0 which is representative of the determined inner voltage uV0. This information I_uV0 is then transmitted to the VAC-module mVAC.

As a mathematical analogy, the IVS-module mIVS can be seen as a generator of a 'back EMF' signal because it works to counteract changes in the grid voltage. Being outside of the context of rotating machines having inductive coils (e.g. synchronous machines), this 'back EMF' can be thought of as a virtual back EMF signal.

The VAC-module mVAC receives the information I_uV0 and determines, depending on this information I_uV0, the above-mentioned information I_iRef1 being representative of the preliminary reference current iRef1. The VAC-module mVAC may be provided to contribute to the voltage source behavior of the PECD. The VAC-module mVAC may thus allow for the PECD to operate as a harmonic sink and generate fault currents automatically. The VAC-module mVAC can be inductive-ohmic, such as a series- or parallel-connected inductor and resistor. It is also possible that the VAC-module mVAC can be purely inductive or purely resistive.

The operation of the VAC-module mVAC may follow the principles of virtual admittance in electronics. In the context of the present exemplary embodiment, the preliminary reference current iRef1 may be determined depending on a difference between the phase-phase voltage uSec and the inner voltage uV0 by using the following formula:

$$iRef1 = Y \cdot (uSec - uV0).$$

Here, Y is the virtual admittance.

The information I_iRef1 is transmitted to the RSUM-module mRSUM. Depending on this, on information I_VCL2 and on information I_PBC, the RSUM-module mRSUM determines information I_iRef2 which is representative of a reference current iRef2. The information I_VCL2 is determined by the VCL&PBC-module m VCL&PBC and is representative of an admittance adjustment parameter ky. With this, the RSUM-module mRSUM adjusts the admittance Y and, accordingly, adjusts the preliminary reference current iRef1, e.g. according to the following formula:

$$iRef1' = ky \cdot iRef1 = ky \cdot Y \cdot (uSec - uV0) = Y' \cdot (uSec - uV0).$$

iRef1' is the adjusted preliminary reference current and Y' is the adjusted admittance. The adjustment of the admittance is part of the above-mentioned second measure M2.

The adjusted preliminary reference current iRef1' is further adjusted by the RSUM-module mRSUM depending on the information I_PBC. The information I_PBC is representative of one or more power adjustment parameters. Adjusting the preliminary reference current iRef1' depending on the one or more power adjustment parameters accounts for an imbalance in the different legs of the PECD. The result of this adjustment is the reference current iRef2 which is stored in the information I_iRef2.

The information I_iRef2 is transmitted to the ICL-module mICL which may execute the first measure M1 by comparing the reference current iRef2 to the threshold and, if applicable cut-off the reference current iRef2. The threshold is, in this case, the rated current iLim. Thus, the threshold is determined based on the physical limitations of the PECD components. The threshold can, however, also be determined differently. The threshold may be constant or dynamically determined.

A signal I_iRef2' which is representative of the reference current iRef2 or, if applicable, the cut-off reference current iRef2' is then transmitted to the VCC-module mVCC. The VCC-module mVCC controls the firing of switches in the converter cells. The VCC-module mVCC may generate a voltage control signal depending on the information I_iRef2'. This voltage control signal can then be used by a modulator to control the switches in the converter cells. In this way, the current iValve is controlled.

The embodiments shown in the Figures as stated represent exemplary embodiments. Therefore, they do not constitute a complete list of all embodiments according to the method, the control device and the grid control system. Actual methods, control devices and grid control systems may vary from the embodiments shown in terms of arrangements, elements and method steps, for example.

Reference sign list:

1      power electronic converter device
2      control device
3      transformer

I        fault information
M1    first measure
M2    second measure
M3    third measure
T1     first time interval
T2     second time interval
T3     third time interval

iValve    current through power electronic converter device / vlave current
iPri      line current
uPri     phase-phase voltage
uSec    phase-phase voltage

mSLF         limiter function module
mDVC       direct voltage controller module
mAVC       alternating voltage controller module
mVCL&PBC   current limiter and power balancing control module
mIVS         inner voltage source module
mVAC       virtual admittance controller module
mRSUM     reference summation module
mICL        instantaneous current limiter module
mVCC       vector current controller module

S_iPri      signal
I_iLim      information
I_VAC_lim   information
S_uPri     signal
I_udcRef   information
S_uDC     signal
S_iValve    signal
S_uSec     signal

I_uRef        information
I_VCL1       information
I_VCL2       information
I_PBC        information
I_uV0        information
I_iRef1       information
I_iRef2       information
I_iRef2'      information

## Claims

1.  Method for operating a power electronic converter device (1), comprising the steps

    - providing fault information (I) which is representative of whether a fault appears in a grid connected with the power electronic converter device (1), and, if this is the case,
    - executing a first measure (M1) over a first time interval (T1), wherein the first measure (M1) is configured to reduce a current (iValve) through the power electronic converter device (1),
    - executing a second measure (M2) over a second time interval (T2), wherein the second measure (M2) is configured to reduce the current (iValve) through the power electronic converter device (1), wherein
    - the first measure (M1) is faster in reducing the current (iValve) through the power electronic converter device (1) than the second measure (M2),
    - the second time interval (T2) is longer than the first time interval (T1).

2.  Method according to claim 1, wherein, if the fault information (I) is representative of a fault to appear in the grid, the method comprises

    - executing a third measure (M3) over a third time interval (T3), wherein the third measure (M3) is configured to reduce the current (iValve) through the power electronic converter device (1), wherein
    - the second measure (M2) is faster in reducing the current (iValve) through the power electric converter device (1) than the third measure (M3),
    - the third time interval (T3) is longer than the second time interval (T2).

3.  Method according to claim 1 or 2, further comprising

    - determining current reference information (I_iRef2) which is representative of a reference current (iRef2) for controlling the current (iValve) through the power electronic converter device (1),
    - the first measure (M1) is clipping the reference current (iRef2) when the reference current (iRef2) reaches a threshold.

4.  Method according to claim 3, wherein

    - the second measure (M2) comprises a continuous reduction of the reference current (iRef2) which preserves the sinusoidal wave-shape of the reference current (iRef_2).

5.  Method according to claim 4, further comprising

    - providing virtual admittance information, which is representative of a virtual admittance, wherein the reference current information (I_iRef2) is determined depending on the virtual admittance information, wherein
    - the continuous reduction of the reference current (iRef2) comprises an adjustment of the virtual admittance.

6.  Method according to claim 4 or 5, further comprising

    - providing inner voltage information (I_uV0) which is representative of an inner voltage, wherein the reference current information (I_iRef2) is determined depending on the inner voltage information (I_uV0), wherein
    - the continuous reduction of the reference current (iRef2) comprises a modification of the inner voltage.

7.  Method according to claim 2 or any one of claims 3 to 6 in its dependency of claim 2, further comprising

- providing inner voltage information (I_uV0) which is representative of an inner voltage, wherein the reference current information (I_iRef2) is determined depending on the inner voltage information (I_uV0), wherein
- the third measure (M3) comprises a continuous adjustment of the inner voltage used in the control system (2).

8. Method according to any one of the preceding claims, wherein

   - the first time interval (T1) is at most 10 ms long.

9. Method according to any one of the preceding claims, wherein

   - the second time interval (T2) is at most 500 ms long.

10. Computer program comprising instructions which, when the program is executed by a control system, cause the control system to carry out the method of any one of claims 1 to 9.

11. Computer-readable data carrier having the computer program of claim 10 stored thereon.

12. Control device (2) for operating a power electronic converter device (1), comprising means for executing the method of any one of claims 1 to 9.

13. Grid control system comprising

   - a power electronic converter device (1),
   - the control device (2) according to claim 12, wherein
   - the control device(2) is signally connected to the power electronic converter device (1).

14. Grid control system, wherein

   - the power electronic converter device (1) is a STATCOM or Enhanced STATCOM.

Fig. 1

Fig. 2

EP 4 485 733 A1

Fig. 3

S_iPri, I_iLim → mSLF → I_AVC_lim → mAVC (S_uPri) → I_uRef

S_uSec, I_uV0 → mIVS → mVAC → I_iRef1 → mRSUM (Σ) → I_iRef2 → mICL (I_iLim) → I_iRef2′ → mVCC

I_VCL1, I_VCL2

I_udcRef, S_iValve, S_uSec → mDVC (S_uDC) → mVCL & PBC (I_iLim) → I_PBC

2

Fig. 4

M1

M2

M3

t

T1

T2

T3

Fig. 5

i

iRef2'

iRef2

M1

t

T1

T2

Europäisches
Patentamt

European
Patent Office

Office européen
des brevets

# EUROPEAN SEARCH REPORT

Application Number

EP 23 18 2751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZAREI SEYED FARIBORZ ET AL: "Reinforcing Fault Ride Through Capability of Grid Forming Voltage Source Converters Using an Enhanced Voltage Control Scheme", IEEE TRANSACTIONS ON POWER DELIVERY, IEEE SERVICE CENTER, NEW YORK, NY, US, vol. 34, no. 5, 1 October 2019 (2019-10-01), pages 1827-1842, XP011746904, ISSN: 0885-8977, DOI: 10.1109/TPWRD.2018.2844082 [retrieved on 2019-09-20] * the whole document * | 1-14 | INV. H02J3/00 H02H7/10 H02H9/02 H02M1/32 |
| A | DU WEI ET AL: "A Current Limiting Control Strategy for Single-Loop Droop-Controlled Grid-Forming Inverters Under Balanced and Unbalanced Faults", 2022 IEEE ENERGY CONVERSION CONGRESS AND EXPOSITION (ECCE), IEEE, 9 October 2022 (2022-10-09), pages 1-7, XP034235222, DOI: 10.1109/ECCE50734.2022.9947505 [retrieved on 2022-11-30] * the whole document * | 1-14 | TECHNICAL FIELDS SEARCHED (IPC) H02J H02M H02H |
| A | PLET CORNELIS A ET AL: "Fault response of inverter interfaced distributed generators in grid-connected applications", ELECTRIC POWER SYSTEMS RESEARCH, ELSEVIER, AMSTERDAM, NL, vol. 106, 7 September 2013 (2013-09-07), pages 21-28, XP028733874, ISSN: 0378-7796, DOI: 10.1016/J.EPSR.2013.07.013 * the whole document * | 1-14 | |

-/--

The present search report has been drawn up for all claims

| Place of search | Date of completion of the search | Examiner |
|---|---|---|
| Munich | 21 December 2023 | Tchegho Kamdem, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 23 18 2751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/209904 A1 (ADAMCZYK ANDRZEJ [GB]) 2 July 2020 (2020-07-02) * paragraphs [0022] – [0042], [0051] – [0062]; figure 4 * | 1-14 | |
| A | US 2014/355161 A1 (TORRES HECTOR [US] ET AL) 4 December 2014 (2014-12-04) * paragraphs [0008], [0009], [0012] – [0017]; figure 1 * | 1,12 | |

TECHNICAL FIELDS
SEARCHED      (IPC)

The present search report has been drawn up for all claims

| Place of search | Date of completion of the search | Examiner |
|---|---|---|
| Munich | 21 December 2023 | Tchegho Kamdem, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**

**ON EUROPEAN PATENT APPLICATION NO.**

EP 23 18 2751

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2023

| Patent document cited in search report | | | Publication date | Patent family member(s) | | | Publication date |
|---|---|---|---|---|---|---|---|
| US 2020209904 | A1 | | 02-07-2020 | CN | 109463030 | A | 12-03-2019 |
| | | | | EP | 3459166 | A1 | 27-03-2019 |
| | | | | GB | 2550421 | A | 22-11-2017 |
| | | | | US | 2020209904 | A1 | 02-07-2020 |
| | | | | WO | 2017198724 | A1 | 23-11-2017 |
| US 2014355161 | A1 | | 04-12-2014 | CN | 105229551 | A | 06-01-2016 |
| | | | | EP | 3005012 | A1 | 13-04-2016 |
| | | | | JP | 6585037 | B2 | 02-10-2019 |
| | | | | JP | 2016520241 | A | 11-07-2016 |
| | | | | US | 2014355161 | A1 | 04-12-2014 |
| | | | | WO | 2014193971 | A1 | 04-12-2014 |

EPO FORM P0459

For more details about this annex : see Official Journal of the European Patent Office, No. 12/82